# EUROPEAN PATENT APPLICATION

(11) **EP 2 134 009 A2**
(43) Date of publication of application: **16.12.2009**
(21) Application number: 09161987.4
(22) Date of filing: 05.06.2009
(51) Int. Cl.: H04B 10/158, G02B 6/34, H04L 27/22

(54) **Delay Interferometer**

(30) Priority: 10.06.2008 JP 2008152239
(71) Applicant: Yokogawa Electric Corporation, Musashino-shi Tokyo 180-89750 (JP)
(72) Inventor: Asano, Junichiro, Tokyo 180-8750 (JP); Iemura, Koki, Tokyo 180-8750 (JP); Hihara, Mamoru, Tokyo 180-8750 (JP)
(74) Representative: Grünecker, Kinkeldey, Stockmair & Schwanhäusser Anwaltssozietät

(57) **Abstract**

In a delay interferometer in which a Michelson delay interferometer unit is mounted in a package, the delay interferometer includes a Michelson delay interferometer unit which outputs first interference output light from a first output port, the first interference output light being obtained by optically processing input light received through an input port by a beam splitter and reflectors, and which outputs second interference output light from a second output port, and the splitting portion and the beam splitter are integrally structured.

## Description

This application claims priority to Japanese Patent Application No. 2008-152239, filed June 10, 2008, in the Japanese Patent Office. The Japanese Patent Application No. 2008-152239 is incorporated by reference in its entirety.

### TECHNICAL FIELD

The present disclosure relates to a delay interferometer using a spatial optical system, which is used for demodulating a differential phase shift keying signal in optical fiber communication, particularly in optical fiber communication using a dense wavelength division multiplexing (DWDM) system.

### RELATED ART

In optical fiber communication using a DWDM system, an optical signal which is modulated by the differential phase shift keying method (DPSK) or the differential quadrature phase shift keying method (DQPSK) is mainly transmitted, and a received optical signal is demodulated by a demodulator including a delay interferometer.

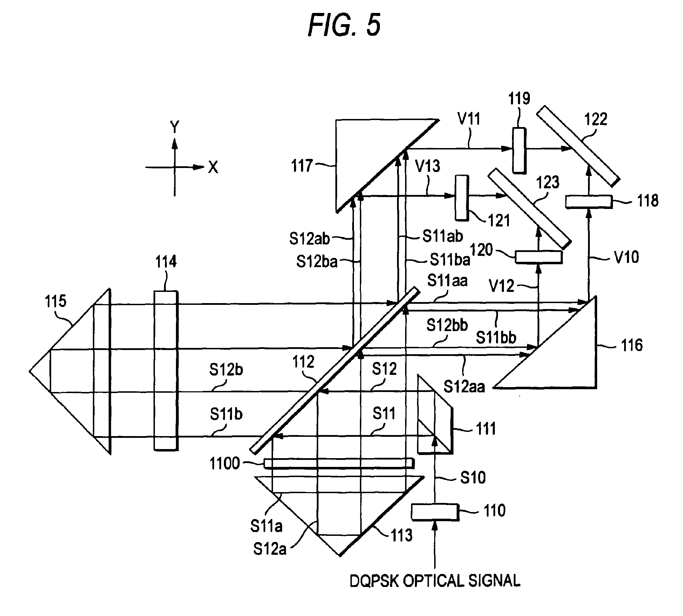

As a delay interferometer using a spatial optical system, a Michelson delay interferometer is well known. Fig. 5 is an optical diagram of a demodulator which is disclosed in Patent Reference 1, and which uses a Michelson delay interferometer.

A light beam S10 which is incident from incident means is split by a splitting portion 111 into two light beams S11, S12. The light beams S11, S12 are incident on the Michelson delay interferometer. Four interference outputs from the Michelson delay interferometer due to the input light beams S11, S12 are reflected by a mirror 116 or 117, and received by an optical detector 122 or 123 through a lens 118, 119, 120, or 121. These components constitute a demodulator for a DQPSK optical signal.

[Patent Reference 1] JP-A-2007-151026

When it is assumed that the optical detector 122 is an optical fiber, angle and axis deviations due to the mounting accuracy of the splitting portion 111, particularly the angle error in the rotation direction in the XY plane occur in the light incident on the optical fiber, thereby producing a problem in that the coupling efficiency with respect to the optical fiber is impaired.

The reflected light in the split face is hardly adjusted because an angle deviation which is twice of that in the split face is generated. Furthermore, the angle error of the splitting portion in the rotation direction in the XY plane cannot be corrected by reflectors 113, 115.

### SUMMARY

Exemplary embodiments of the present invention provide a delay interferometer in which position and angle errors of a splitting portion are minimized and the performance is enhanced.

The invention is configured in the following manners.
(1) A delay interferometer comprises:
   a package including an input port through which input light is received, a first output port from which a first interference output light is output, and a second output port from which a second interference output light is output; and
   a Michelson delay interferometer unit mounted in the package, the Michelson delay interferometer unit including a splitting portion which splits the input light into A and B channels, and a beam splitter and reflectors which optically process the split lights to form the first interference output light and the second interference output light,
wherein the splitting portion and the beam splitter are integrally structured.

(2) In the delay interferometer of (1), the reflectors are placed to be adjustable in at least one of X-axis, Y-axis, θX-axis, and θY-axis directions with respect to a bottom face of the package.

(3) In the delay interferometer of (1) or (2), optical axis deviations of the first interference output light and second interference output light which are output from the Michelson delay interferometer unit are corrected by adjustment of the reflectors in at least one of X-axis, Y-axis, θX-axis, and θY-axis directions.

(4) In the delay interferometer of any one of (1) to (3), the beam splitter and at least one of the reflectors are integrally structured by a same material.

Other features and advantages may be apparent from the following detailed description, the accompanying drawings and the claims.

### BRIEF DESCRIPTION OF THE DRAWINGS

Fig. 1 is a functional block diagram showing an embodiment of a delay interferometer to which the invention is applied.
Fig. 2 is a plan view showing in detail the configuration of the embodiment of Fig. 1.
Figs. 3A to 3C are plan views showing optical paths of A and B channels in the configuration of Fig. 2.
Fig. 4 is a plan view showing another embodiment of the invention.
Fig. 5 is an optical diagram of a demodulator which is disclosed in Patent Reference 1.

### DETAILED DESCRIPTION

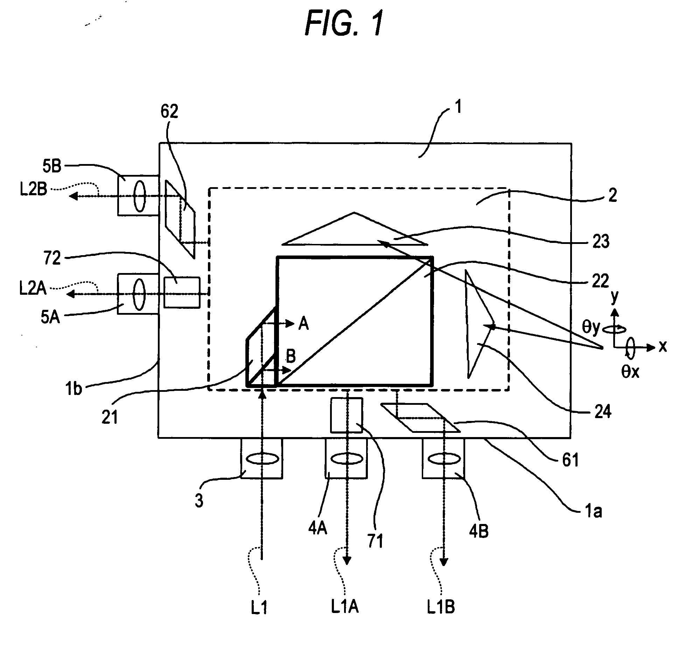

Hereinafter, the invention will be described in more detail with reference to the drawings. Fig. 1 is a functional block diagram showing an embodiment of a delay interferometer to which the invention is applied. The embodiment is a small delay interferometer having a package configuration in which a Michelson delay interferometer unit is mounted in a package having first and second sidewall portions that are perpendicular to each other, and an output port for one interference output light, and an output port for the other interference output light are perpendicularly distributed in the first and second sidewall portions, respectively.

Referring to Fig. 1, a Michelson delay interferometer unit 2 is mounted in a quadrilateral package 1 having in the first and second sidewall portions 1a, 1b that are perpendicular to each other. Input light Li is input into the Michelson delay interferometer unit 2 through an input port 3 disposed in the first sidewall portion 1a.

The Michelson delay interferometer unit 2 includes a splitting portion 21, a beam splitter 22 which is connected to the splitting portion 21, a first reflector 23, and a second reflector 24. The Michelson delay interferometer unit 2 optically processes light fluxes of A and B channels which have been split by the splitting portion 21.

A feature of the invention is that the splitting portion 21 and the beam splitter 22 are integrally structured. When the splitting portion 21 and beam splitter 22 in which the dimensional accuracy is ensured by a highly accurate polishing process are integrated with each other, the positional and angular accuracies of the split light fluxes can be improved.

The embodiment operates on the same principle as the Michelson delay interferometer disclosed in Patent Reference 1 shown in Fig. 5. In the Michelson delay interferometer unit 2, the input light Li which is modulated by DQPSK is split into A and B channels by the splitting portion 21, and then optically processed. In each of the channels, first interference output light and second interference output light are output.

In the Michelson delay interferometer unit 2, the A-channel first interference output light L1A is output from an A-channel first output port 4A disposed in the first sidewall portion 1a, and the A-channel second interference output light L2A is output from an A-channel second output port 5A disposed in the second sidewall portion 1b.

Similarly, the B-channel first interference output light L1B is output from a B-channel first output port 4B disposed in the first sidewall portion 1a, and the B-channel second interference output light L2B is output from a B-channel second output port 5B disposed in the second sidewall portion 1b.

In the embodiment, in the package 1, first and second optical axis shifting members 61, 62 each of which is formed by a parallel prism are inserted into optical paths of the B-channel first interference output light L1B and the B-channel second interference output light L2B, respectively.

The optical axis shifting members 61, 62 eliminate restrictions of the distances between the ports disposed in the sidewall portions, and reduce the sizes of the components of the Michelson delay interferometer unit 2, thereby contributing to the design of the miniaturized package 1.

First and second optical path length compensating members 71, 72 each of which is formed by a rectangular prism correct the optical path lengths of the A-channel first interference output light L1A and the A-channel second interference output light L2A, i.e., the optical path length difference caused by the splitting portion 21 and the optical axis shifting members 61, 62, thereby contributing to a higher accuracy.

The first and second optical path length compensating members 71, 72 increase the optical path lengths of the A-channel interference output light. Alternatively, the optical path length compensating members may be inserted into the B channel depending on the design of the splitting portion 21. Namely, the optical path length compensating members are inserted into the channel in which reduction of optical path lengths is performed.

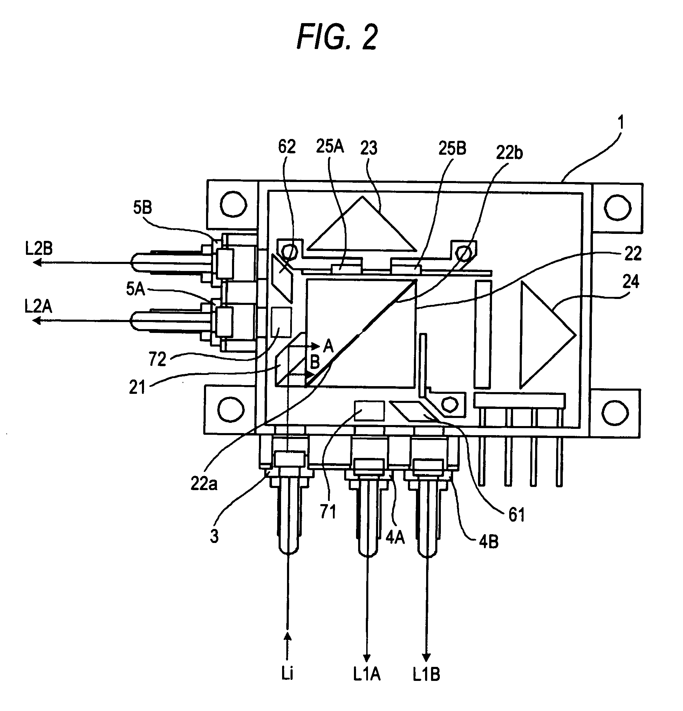

Fig. 2 is a plan view showing in detail the configuration of the embodiment of Fig. 1. The Michelson delay interferometer unit 2 mounted in the package 1 includes: the beam splitter 22 which is joined to the splitting portion 21 to optically process A-channel input light and B-channel input light; the first reflector 23; the second reflector 24; an A-channel phase adjusting plate 25A; and a B-channel phase adjusting plate 25B.

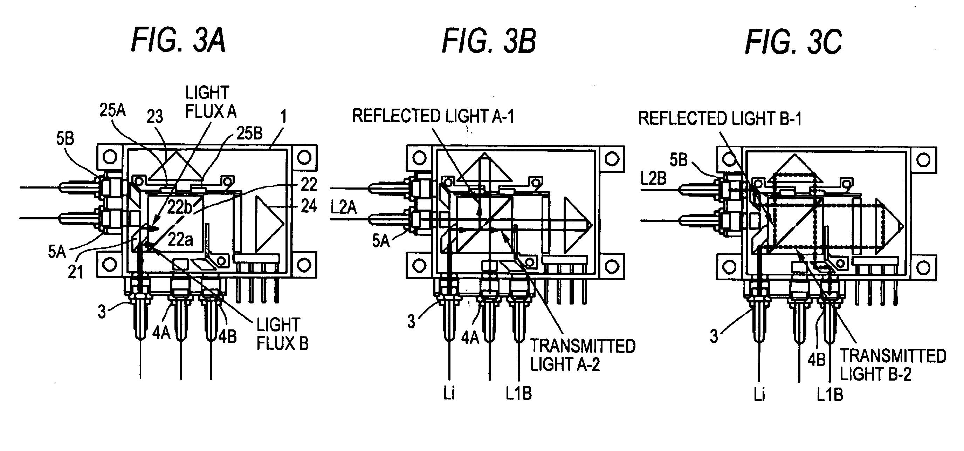

Figs. 3A to 3C are plan views showing optical paths of the A and B channels in the configuration of Fig. 2. Fig. 3A shows optical paths of the split of the A and B channels, Fig. 3B shows those of the A channel, and Fig. 3B shows those of the B channel, Hereinafter, the operation of the delay interferometer will be described with reference to Figs. 2 and 3.

The input light Li which is incident through the input port 3 is passed through a lens to be converted to substantially parallel light, and then incident on the splitting portion 21. The incident substantially parallel light flux is split into transmitted light and reflected light by an NPBS film of the splitting portion 21.

The light transmitted through the NPBS film is totally reflected by a total reflection surface to be formed as an A-channel light flux, and the light reflected by the NPBS film of the splitting portion 21 is formed as a B-channel light flux. As shown in Fig. Fig. 3A, the A-channel and B-channel light fluxes are incident on the beam splitter 22 including first and second NPBS films 22a, 22b.

As shown in Fig. 3B, the light flux A which is incident on the beam splitter 22 is split into reflected light A-1 and transmitted light A-2 by the first NPBS film 22a of the beam splitter 22. The reflected light A-1 is returned by the first reflector 23, the transmitted light A-2 is returned by the second reflector 24, and the both are then incident on the second NPBS film 22b of the beam splitter 22.

The transmitted light which is formed by causing the reflected light A-1 to be transmitted through the NPBS film 22b, and the reflected light which is formed by causing the transmitted light A-2 to be reflected by the NPBS film 22b are output as the A-channel first interference output light L1A to the A-channel first output port 4A. At this time, the A-channel first interference output light L1A is the output the Michelson delay interferometer which is determined by the positions of the first and second reflectors 23, 24, i.e., the optical path length difference between the reflected light A-1 and the transmitted light A-2.

Similarly, the reflected light which is formed by causing the reflected light A-1 to be reflected by the NPBS film 22b, and the transmitted light which is formed by causing the transmitted light A-2 to be transmitted through the NPBS film 22b are output as the A-channel second interference output light L2A to the A-channel second output port 5A.

Also with respect to the light flux B shown in Fig. 3C, similarly with the light flux A, the B-channel first interference output light L1B is output to the B-channel first output port 4B, and the B-channel second interference output light L2B is output to the B-channel second output port 5B. The first and second reflectors 23, 24 are placed to be adjustable in at least one of X-axis, Y-axis, θX-axis, and θY-axis directions with respect to a bottom face of the package 1. Optical axis deviations of the first interference output light L1A or L1B and second interference output light L2A or L2B which are output from the Michelson delay interferometer unit 2 are corrected by adjustment of the first and second reflector 23, 24 in at least one of X-axis, Y-axis, θX-axis, and θY-axis directions. Therefore, it is possible to realize a high-performance delay interferometer in which the optical axis accuracy that cannot be adjusted by the reflectors can be improved.

As described with reference to Fig. 1, the B-channel first and second interference output light L1B, L2B are supplied into the respective output ports through the first and second optical axis shifting members 61, 62. The A-channel first and second interference output light L1A, L2A are supplied into the respective output ports through the first and second optical path length compensating members 71, 72.

A thin-film heater is formed on the A-channel phase adjusting plate 25A which is inserted in the optical path of the reflected light A-1. When an electric power is supplied to the heater, the refractive index of the phase adjusting plate 25A is changed, and the optical path length is equivalently changed, whereby the interference spectrum of the A-channel interference output light can be adjusted. Similarly, the B-channel phase adjusting plate 25B inserted in the optical path of the reflected light B-1 can adjust the interference spectrum of the B-channel interference output light. More specifically, a thin-film heater is formed on the B-channel phase adjusting plate 25B, and when an electric power is supplied to the heater, the refractive index of the phase adjusting plate 25B is changed, and the optical path length is equivalently changed, whereby the interference spectrum of the B-channel interference output light can be adjusted.

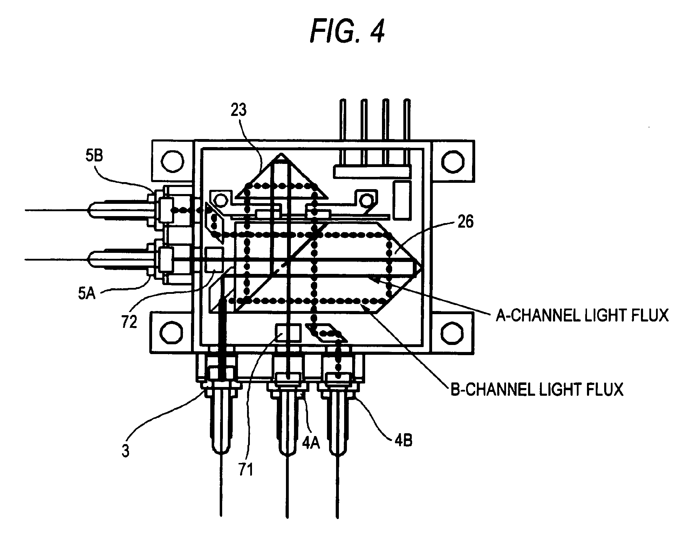

Fig. 4 is a plan view showing another embodiment of the invention. The embodiment is **characterized in that** the functions of the beam splitter 22 and the second reflector 24 are integrally structured by the same material, to be configured as an integrated beam splitter 26.

In the integrated configuration, the optical path length therein can be equivalently shortened because the material has a high refractive index (for example, about 1.5), and therefore the package size can be further reduced. Also the beam splitter 22 and the first reflector 23 can be integrated with each other. When these components are integrated with each other, it is possible to realize a performance improvement in which the optical path length change due to the difference of the coefficients of thermal expansion is minimized.

Although the embodiment in which the delay interferometer has the configuration where the package has the perpendicular wall portions, and the input and output ports are perpendicularly disposed in the wall portions has been described, the invention is versatile, and is not restricted by the shape of the package.

## Claims

1. A delay interferometer comprising:
a package including an input port through which input light is received, a first output port from which a first interference output light is output, and a second output port from which a second interference output light is output; and
a Michelson delay interferometer unit mounted in the package, the Michelson delay interferometer unit including a splitting portion which splits the input light into A and B channels, and a beam splitter and reflectors which optically process the split lights to form the first interference output light and the second interference output light,
wherein the splitting portion and the beam splitter are integrally structured.

2. A delay interferometer according to claim 1, wherein the reflectors are placed to be adjustable in at least one of X-axis, Y-axis, θX-axis, and θY-axis directions with respect to a bottom face of the package.

3. A delay interferometer according to claim 1 or 2,
wherein optical axis deviations of the first interference output light and second interference output light which are output from said Michelson delay interferometer unit are corrected by adjustment of the reflectors in at least one of X-axis, Y-axis, θX-axis, and θY-axis directions.

4. A delay interferometer according to any one of claims 1 to 3, wherein the beam splitter and at least one of the reflectors are integrally structured by a same material.
